# EUROPEAN PATENT SPECIFICATION

(11) **EP 3 542 955 B1**
(45) Date of publication and mention of the grant of the patent: **24.04.2024**
(21) Application number: 19162978.1
(22) Date of filing: 14.03.2019
(51) Int. Cl.: B24B 5/44, B24B 9/04, B24B 47/12

(54) **WHEEL BURR REMOVING DEVICE**
VORRICHTUNG ZUM ENTFERNEN VON RADGRATEN
DISPOSITIF D'ÉLIMINATION DE BAVURES DE ROUE

(30) Priority: 20.03.2018 CN 201810226690
(43) Date of publication of application: 25.09.2019
(73) Proprietor: CITIC Dicastal Co., Ltd., Qinhuangdao, Hebei 066011 (CN)
(72) Inventor: XUE, Bowen, Qinhuangdao Hebei 066011 (CN); FAN, Liguo, Qinhuangdao Hebei 066011 (CN); WU, Hao, Qinhuangdao Hebei 066011 (CN); GUO, Jiandong, Qinhuangdao Hebei 066011 (CN)
(74) Representative: Kraus & Lederer PartGmbB

(56) References cited:
- CN-A- 107 414 193
- CN-U- 205 237 745

## Description

### Field of the Invention

The present invention relates to a burr removing device, and specifically, to a wheel burr removing device.

### Background of the Invention

In the machining process of an aluminum alloy wheel, burrs are sure to produce on a wheel center hole, the circumferential edge below the center hole, a bolt hole and a back cavity weight reduction pit. If the produced burrs are not removed in time, the subsequent coating effect will be seriously affected, and even the wheel is corroded in advance during use. Therefore, a multifunctional and general-purpose automatic burr removing device is needed to remove burrs from these parts of the wheel.

CN 205 237 745 U describes a rotation type wheel burring device, including servo motor, cylinder, brush etc. The wheel arrives the intermediate position of four double-layered tight pulleys during the use, and die clamping cylinder press from both sides the wheel tight and breaks away from the roll table face through four double-layered tight pulleys of last gear and rack messenger, and servo motor I makes it press from both sides rotation under the tight state, servo motor II makes the brush rotate, and electric servo cylinder I arrives suitable position through II adjustment brushes on the guide rail after, the lifting cylinder passes through the guide pillar with its jacking, can be got rid of here burr when touching flange root corner, and electric servo cylinder II can get rid of the burr of rim root after making the brush adjust to suitable horizontal angle through guide rail III, servo motor III can make the circumferential direction of brush adjust to suitable angle by lower gear and ring gear, and simultaneously, electric servo cylinder III adjusts to suitable position by guide rail I with the brush, makes brush along the flange root contained angle burr pivoted tangential direction of department rotation, can rapid removal when touching here burr.

CN 107 414 193 A describes a high-precision wheel flange burr removing device. The high-precision wheel flange burr removing device is composed of a rack (1), a base (2), a longitudinal guide rail (3), a longitudinal servo motor (4), a ball screw I (5), a longitudinal moving plate (6), a transverse servo motor (7), a transverse guide rail (8), a ball screw II (9) and the like. According to the high-precision wheel flange burr removing device, a central hole is adopted for initially positioning and clamping a wheel, and then the coaxial deviation between the central hole and a cap opening is eliminated, so that a rotary center of the burr part of an outer wheel flange is coincident with a rotary center of a cutter, and high-precision burr removing is realized.

### Summary of the Invention

The purpose of the present invention is to provide a wheel burr removing device, which can be used for removing burrs from a wheel center hole, the circumferential edge below the center hole, a bolt hole and a back cavity weight reduction pit.

The device consists of a frame, a lower bottom plate, a left servo motor I, a guide rail I, a left carriage, a left rack I, a left gear I, a left rack II, a left servo motor II, a left gear II, a guide rail II, a left lifting plate, guide posts I, guide sleeves I, springs I, a floating rack, a left servo motor III, a left servo motor IV, a turnover plate, a left shaft I, a left bearing seat I, a tapered brush, an upper bottom plate, an upper gear, upper racks, a guide rail III, a left sliding plate, left bearing seats II, left shafts II, V-shaped rollers, right shafts I, right bearing seats I, a right sliding plate, a cylinder, a right servo motor I, brush bundles I, springs II, fixed blocks, springs III, fixed rings, tapered blocks, tapered heads, springs IV, guide posts II, a sliding block, a guide rail IV, a cylinder rod, a cylinder sleeve, a spring V, a piston, a right servo motor II, a right shaft II, a brush bundle II, a right bearing seat II, a right servo motor III, a right holder, a right lifting plate, a right rack I, a guide rail V, a right gear II, a right rack II, a right servo motor IV, a right gear I, a right carriage, a right servo motor V, etc.

A left brush system includes: the lower bottom plate is fixed below the frame; the left carriage is installed above the lower bottom plate via the guide rail I; the left rack I is fixed on the left side of the left carriage; the left servo motor I is fixed below the lower bottom plate, and the left gear I is installed at the output end thereof; the left gear I is engaged with the left rack I; the left lifting plate is installed on the right side of the left carriage via the guide rail 11; the left rack II is fixed on the right side of the left carriage; the left servo motor II is fixed on the right side of the left lifting plate, and the left end gear II is fixed at the output end thereof; the left gear II is engaged with the left rack 11; the four guide sleeves I are fixed on a top plate of the left lifting plate; the four guide posts I matched with the guide sleeves I are fixed below the floating rack; the springs I are sleeved on the guide posts I and arranged above the guide sleeves I; the left servo motor III is fixed on the side of the floating rack, and the output end thereof is connected with the side of the turnover plate; the left servo motor IV is fixed below the turnover plate; the left bearing seat I is fixed above the turnover plate; the left shaft I is installed inside the left bearing seat I via a bearing; the output end of the left servo motor IV is connected with the lower part of the left shaft I; and the tapered brush is fixed above the left shaft I.

A synchronous clamping drive system includes: the upper bottom plate is fixed at above the frame; the upper gear is fixed in the middle above the upper bottom plate; the left sliding plate is installed above the upper bottom plate via the guide rail III; the two left bearing seats are fixed above the left sliding plate; the two left shafts II are installed inside the left bearing seats II via bearings; the V-shaped rollers are fixed above the two left shafts 11; the two right bearing seats I are fixed above the right sliding plate; the two right shafts I are installed inside the right bearing seats I via bearings; the V-shaped rollers are fixed above the two right shafts I; the right servo motor I is fixed below the right sliding plate, and the output end thereof is connected with one of the right shafts I; the cylinder is fixed on the side of the frame, and the output end thereof is connected with the right sliding plate; an upper rack is fixed below the left sliding plate and the right sliding plate respectively, and the two upper racks are engaged with the upper gear at the same time.

A right brush system includes: a plurality of brush bundles I are installed on the side of the fixed blocks; the springs II are installed inside the fixed blocks and arranged at the bottom of each of the brush bundles I; a plurality of fixed blocks are distributed uniformly in the circumferential direction; one end of each spring III is connected with the inner side of the fixed block, and the other end is connected with the fixed ring; a plurality of tapered blocks are fixed inside the fixed blocks and arranged below the springs III; the tapered heads are arranged below the tapered blocks, and the tapered surfaces thereof are matched with the lower tapered surfaces of the tapered blocks; a plurality of guide posts II are fixed below the fixed blocks and matched with holes in the sliding block; the springs IV are sleeved outside the guide posts II and arranged below the fixed blocks; the sliding block is installed at the upper end of an upper flat plate of the right shaft II via the guide rail IV; the brush bundle II is installed on the side of the upper flat plate of the right shaft 11; the spring V is arranged at the bottom of the brush bunch 11; the upper end of the cylinder rod is connected with the tapered head, and the lower end is connected with the piston; the cylinder sleeve is matched with the cylinder rod and fixed at the upper center position of the right shaft 11; the piston is matched with a hole in the upper center of the right shaft 11; the cylinder rod, the cylinder sleeve, the piston and the hole in the upper center of the right shaft II together form a self-made cylinder; the right shaft II is installed inside the right bearing seat II via a bearing; the right bearing seat II is installed inside the right holder; the right servo motor II is fixed on the side of the right holder, and the output end thereof is connected with the right bearing seat 11; the right servo motor III is fixed at the bottom of the right bearing seat II, and the output end thereof is connected with the lower part of the right shaft 11; the right lifting plate is fixed below the right holder; the right lifting plate is installed on the left side of the right carriage via the guide rail V; the right rack I is fixed on the left side of the right carriage; the right servo motor V is fixed on the left side of the right lifting plate, and the right gear I is installed at the output end thereof; the right gear I is engaged with the right rack I; the right servo motor IV is fixed at the bottom of the lower bottom plate, and the right gear II is fixed at the output end thereof; the right rack II is fixed on the right side of the right carriage; and the right gear II is engaged with the right carriage.

In the working process, the cylinder drives the upper gear, the upper rack and the four V-shaped rollers to synchronously clamp a wheel; the right servo motor I drives one of the right shafts I to rotate, so that the clamped wheel can rotate; the left servo motor I drives the tapered brush to move below a wheel bolt hole via the left gear I, the left rack I and the guide rail I; the left servo motor IV drives the tapered brush to rotate via the left shaft I; the left servo motor II drives the tapered brush to ascend via the left gear II, the left rack II and the guide rail II, and when the rotating tapered brush contacts the wheel bolt hole, edge burrs thereon can be removed; the tapered brush rotates certain angle via the left servo motor III, the horizontal and vertical positions of the tapered brush are adjusted via the left servo motor I and the left servo motor II, and burrs can be removed from the weight reduction pit of the spoke back cavity; flexible floating of the tapered brush can be achieved via the springs I, the guide posts I and the guide sleeves I, to fit the deviation caused by the deformation of a spoke on the weight reduction pit; the tapered heads can ascend via the piston and the cylinder rod, and the plurality of fixing blocks and the plurality of brush bundles I can be circumferentially expanded outward under the coordination of the tapered heads and the tapered blocks to fit the center hole diameters of different wheels; vertical floating of the brush bundles I can be achieved via the springs IV and the guide pots 11; the right servo motor III can drive the brush bundles I to rotate via the right shaft 11; the right servo motor IV can drive the brush bundles I to move below the wheel center hole via the right gear II, the right rack II and the guide rail I; the right servo motor V can drive the brush bundles I to ascend via the right gear I, the right rack I and the guide rail V, and when the rotating brush bundles I contact the wheel center hole, burrs thereon can be removed; the right servo motor II can drive the right bearing seat II to turn degrees so that the brush bunch II is upright, and when brush bunch II contacts the circumference below the wheel center hole, burrs thereon can be removed.

The wheel burr removing device can be used for removing burrs from a wheel center hole, the circumferential edge below the center hole, a bolt hole and a back cavity weight reduction pit, and at the same time, has the characteristics of high automation, high removal efficiency, advanced technology, strong universality and high safety and stability.

### Brief Description of the Drawings

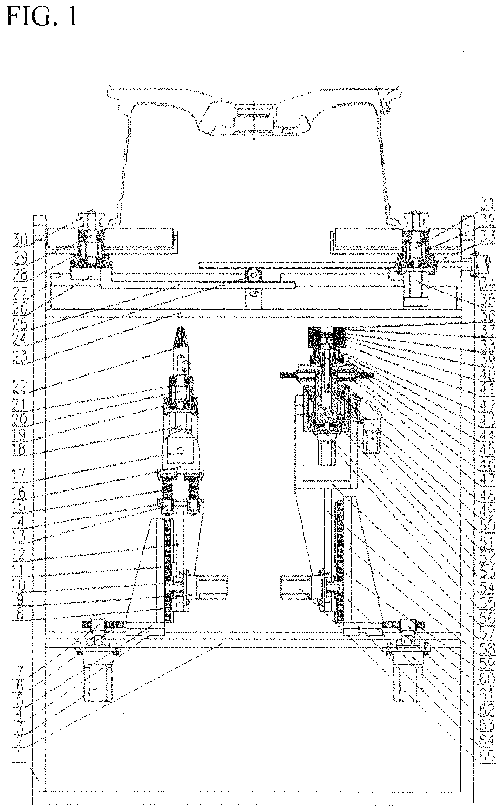

Fig. 1 is a front view of a wheel burr removing device according to the present invention.

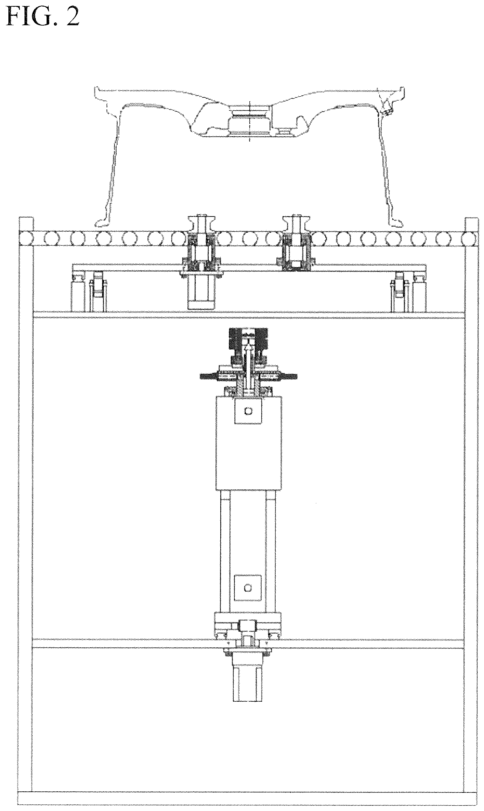

Fig. 2 is a left view of the wheel burr removing device according to the present invention.

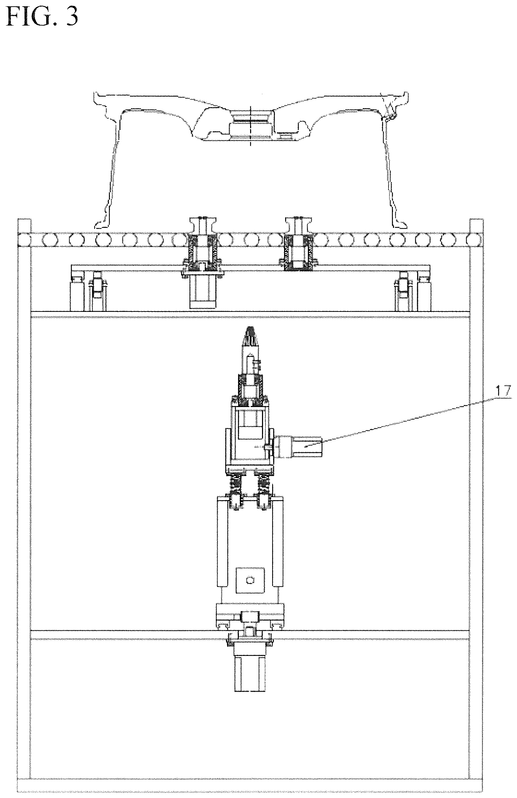

Fig. 3 is a right view of the wheel burr removing device according to the present invention.

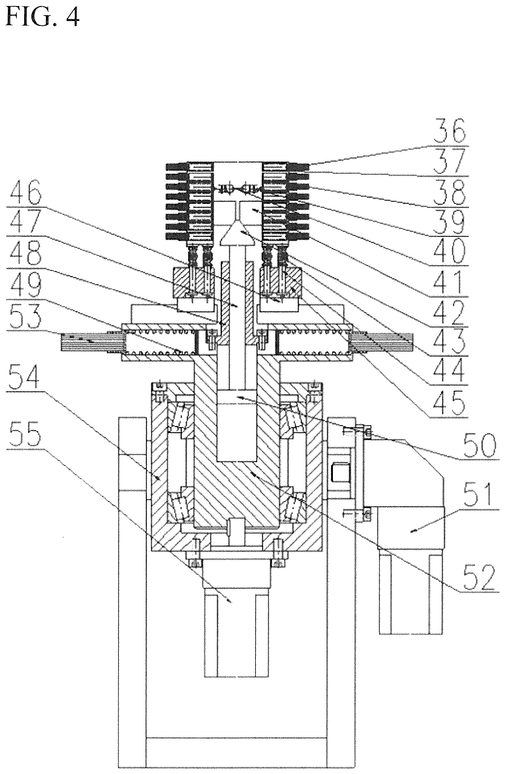

Fig. 4 is a partial front view of the wheel burr removing device according to the present invention.
In which, 1-frame, 2-lower bottom plate, 3-left servo motor I, 4-guide rail I, 5-left carriage, 6-left rack I, 7-left gear I, 8-left rack II, 9-left servo motor II, 10-left gear II, 11-guide rail II, 12-left lifting plate, 13-guide post I, 14-guide sleeve I, 15-spring I, 16-floating rack, 17-left servo motor III, 18-left servo motor IV, 19-turnover plate, 20-left shaft I, 21-left bearing seat I, 22-tapered brush, 23-upper bottom plate, 24-upper gear, 25-upper rack, 26-guide rail III, 27-left sliding plate, 28-left bearing seat 11, 29-left shaft II, 30-V-shaped roller, 31-right shaft I, 32-right bearing seat I, 33-right sliding plate, 34-cylinder, 35-right servo motor I, 36-brush bundle I, 37-spring 11, 38-fixed block, 39-spring III, 40-fixed ring, 41-tapered block, 42-tapered head, 43-spring IV, 44-guide post II, 45-sliding block, 46-guide rail IV, 47-cylinder rod, 48-cylinder sleeve, 49-spring V, 50-piston, 51-right servo motor II, 52-right shaft II, 53- brush bundle II, 54-right bearing seat II, 55-right servo motor 111, 56-right holder, 57-right lifting plate, 58-right rack I, 59-guide rail V, 60-right gear II, 61-right rack II, 62-right servo motor IV, 63-right gear I, 64-right carriage, 65-right servo motor V.

### Detailed Description of the Embodiments

The details and working conditions of the specific device according to the present invention will be described below in combination with the drawings.

The device consists of a frame 1, a lower bottom plate 2, a left servo motor I 3, a guide rail 14, a left carriage 5, a left rack 16, a left gear I 7, a left rack II 8, a left servo motor II 9, a left gear II 10, a guide rail II 11, a left lifting plate 12, guide posts 113, guide sleeves 114, springs 115, a floating rack 16, a left servo motor III 17, a left servo motor IV 18, a turnover plate 19, a left shaft 120, a left bearing seat I 21, a tapered brush 22, an upper bottom plate 23, an upper gear 24, upper racks 25, a guide rail III 26, a left sliding plate 27, left bearing seats II 28, left shafts II 29, V-shaped rollers 30, right shafts 131, right bearing seats I 32, a right sliding plate 33, a cylinder 34, a right servo motor I 35, brush bundles 136, springs II 37, fixed blocks 38, springs III 39, fixed rings 40, tapered blocks 41, tapered heads 42, springs IV 43, guide posts II 44, a sliding block 45, a guide rail IV 46, a cylinder rod 47, a cylinder sleeve 48, a spring V 49, a piston 50, a right servo motor II 51, a right shaft II 52, a brush bundle II 53, a right bearing seat II 54, a right servo motor III 55, a right holder 56, a right lifting plate 57, a right rack 158, a guide rail V 59, a right gear II 60, a right rack II 61, a right servo motor IV 62, a right gear I 63, a right carriage 64, a right servo motor V65, etc.

A left brush system includes: the lower bottom plate 2 is fixed below the frame 1; the left carriage 5 is installed above the lower bottom plate 2 via the guide rail 14; the left rack 16 is fixed on the left side of the left carriage 5; the left servo motor I 3 is fixed below the lower bottom plate 2, and the left gear I 7 is installed at the output end thereof; the left gear I 7 is engaged with the left rack 16; the left lifting plate 12 is installed on the right side of the left carriage 5 via the guide rail II 11; the left rack 118 is fixed on the right side of the left carriage 5; the left servo motor II 9 is fixed on the right side of the left lifting plate 12, and the left end gear II 10 is fixed at the output end thereof; the left gear II 10 is engaged with the left rack II 8; the four guide sleeves 114 are fixed on a top plate of the left lifting plate 12; the four guide posts 113 matched with the guide sleeves I 14 are fixed below the floating rack 16; the springs I 15 are sleeved on the guide posts 113 and arranged above the guide sleeves I 14; the left servo motor III 17 is fixed on the side of the floating rack 16, and the output end thereof is connected with the side of the turnover plate 19; the left servo motor IV 18 is fixed below the turnover plate 19; the left bearing seat 121 is fixed above the turnover plate 19; the left shaft 120 is installed inside the left bearing seat 121 via a bearing; the output end of the left servo motor IV 18 is connected with the lower part of the left shaft 120; and the tapered brush 22 is fixed above the left shaft 120.

A synchronous clamping drive system includes: the upper bottom plate 23 is fixed at above the frame 1; the upper gear 24 is fixed in the middle above the upper bottom plate 23; the left sliding plate 27 is installed above the upper bottom plate 23 via the guide rail III 26; the two left bearing seats 28 are fixed above the left sliding plate 27; the two left shafts II 29 are installed inside the left bearing seats II 28 via bearings; the V-shaped rollers 30 are fixed above the two left shafts II 29; the two right bearing seats 132 are fixed above the right sliding plate 33; the two right shafts 131 are installed inside the right bearing seats 132 via bearings; the V-shaped rollers 30 are fixed above the two right shafts I 31; the right servo motor I 35 is fixed below the right sliding plate 33, and the output end thereof is connected with one of the right shafts 131; the cylinder 34 is fixed on the side of the frame 1, and the output end thereof is connected with the right sliding plate 33; an upper rack 25 is fixed below the left sliding plate 27 and the right sliding plate 33 respectively, and the two upper racks 25 are engaged with the upper gear 24 at the same time.

A right brush system includes: a plurality of brush bundles 136 are installed on the side of the fixed blocks 38; the springs II 37 are installed inside the fixed blocks 38 and arranged at the bottom of each of the brush bundles I 36; a plurality of fixed blocks 38 are distributed uniformly in the circumferential direction; one end of each spring III 39 is connected with the inner side of the fixed block 38, and the other end is connected with the fixed ring 40; a plurality of tapered blocks 41 are fixed inside the fixed blocks 38 and arranged below the springs III 39; the tapered heads 42 are arranged below the tapered blocks 41, and the tapered surfaces thereof are matched with the lower tapered surfaces of the tapered blocks 41; a plurality of guide posts II 44 are fixed below the fixed blocks 38 and matched with holes in the sliding block 45; the springs IV 43 are sleeved outside the guide posts II 44 and arranged below the fixed blocks 38; the sliding block 45 is installed at the upper end of an upper flat plate of the right shaft II 52 via the guide rail IV 46; the brush bundle II 53 is installed on the side of the upper flat plate of the right shaft II 52; the spring V 49 is arranged at the bottom of the brush bunch II 53; the upper end of the cylinder rod 47 is connected with the tapered head 42, and the lower end is connected with the piston 50; the cylinder sleeve 48 is matched with the cylinder rod 47 and fixed at the upper center position of the right shaft II 52; the piston 50 is matched with a hole in the upper center of the right shaft II 52; the cylinder rod 47, the cylinder sleeve 48, the piston 50 and the hole in the upper center of the right shaft II 52 together form a self-made cylinder; the right shaft II 52 is installed inside the right bearing seat II 54 via a bearing; the right bearing seat II 54 is installed inside the right holder 56; the right servo motor 1151 is fixed on the side of the right holder 56, and the output end thereof is connected with the right bearing seat II 54; the right servo motor III 55 is fixed at the bottom of the right bearing seat II 54, and the output end thereof is connected with the lower part of the right shaft II 52; the right lifting plate 57 is fixed below the right holder 56; the right lifting plate 57 is installed on the left side of the right carriage 64 via the guide rail V 59; the right rack 158 is fixed on the left side of the right carriage 64; the right servo motor V 65 is fixed on the left side of the right lifting plate 57, and the right gear 163 is installed at the output end thereof; the right gear I 63 is engaged with the right rack 158; the right servo motor IV 62 is fixed at the bottom of the lower bottom plate 2, and the right gear II 60 is fixed at the output end thereof; the right rack II 61 is fixed on the right side of the right carriage 64; and the right gear II 60 is engaged with the right carriage 64.

In the working process, the cylinder 34 drives the upper gear 24, the upper rack 25 and the four V-shaped rollers 30 to synchronously clamp a wheel; the right servo motor I 35 drives one of the right shafts 131 to rotate, so that the clamped wheel can rotate; the left servo motor I 3 drives the tapered brush 22 to move below a wheel bolt hole via the left gear I 7, the left rack 16 and the guide rail 14; the left servo motor IV 18 drives the tapered brush 22 to rotate via the left shaft 120; the left servo motor II 9 drives the tapered brush 22 to ascend via the left gear II 10, the left rack II 8 and the guide rail II 11, and when the rotating tapered brush 22 contacts the wheel bolt hole, edge burrs thereon can be removed; the tapered brush 22 rotates certain angle via the left servo motor III 17, the horizontal and vertical positions of the tapered brush 22 are adjusted via the left servo motor I 3 and the left servo motor II 9, and burrs can be removed from the weight reduction pit of the spoke back cavity; flexible floating of the tapered brush 22 can be achieved via the springs 115, the guide posts I 13 and the guide sleeves I 14, to fit the deviation caused by the deformation of a spoke on the weight reduction pit; the tapered heads 42 can ascend via the piston 50 and the cylinder rod 47, and the plurality of fixing blocks 38 and the plurality of brush bundles I 36 can be circumferentially expanded outward under the coordination of the tapered heads 42 and the tapered blocks 41 to fit the center hole diameters of different wheels; vertical floating of the brush bundles I 36 can be achieved via the springs IV 43 and the guide pots II 44; the right servo motor III 55 can drive the brush bundles I 36 to rotate via the right shaft II 52; the right servo motor IV 62 can drive the brush bundles I 36 to move below the wheel center hole via the right gear II 60, the right rack 1161 and the guide rail 14; the right servo motor V 65 can drive the brush bundles I 36 to ascend via the right gear I 63, the right rack I 58 and the guide rail V 59, and when the rotating brush bundles I 36 contact the wheel center hole, burrs thereon can be removed; the right servo motor 1151 can drive the right bearing seat II 54 to turn 90 degrees so that the brush bunch II 53 is upright, and when brush bunch II 53 contacts the circumference below the wheel center hole, burrs thereon can be removed.

## Claims

1. A wheel burr removing device, consisting of a frame (1), a lower bottom plate (2), a left servo motor I (3), a guide rail I (4), a left carriage (5), a left rack I (6), a left gear I (7), a left rack II (8), a left servo motor II (9), a left gear II (10), a guide rail II (11), a left lifting plate (12), guide posts I (13), guide sleeves I (14), springs I (15), a floating rack (16), a left servo motor III (17), a left servo motor IV (18), a turnover plate (19), a left shaft I (20), a left bearing seat I (21), a tapered brush (22), an upper bottom plate (23), an upper gear (24), upper racks (25), a guide rail III (26), a left sliding plate (27), left bearing seats II (28), left shafts II (29), V-shaped rollers (30), right shafts I (31), right bearing seats I (32), a right sliding plate (33), a cylinder (34), a right servo motor I (35), brush bundles I (36), springs II (37), fixed blocks (38), springs III (39), a fixed ring (40), tapered blocks (41), a tapered head (42), springs IV (43), guide posts II (44), a sliding block (45), a guide rail IV (46), a cylinder rod (47), a cylinder sleeve (48), a spring V (49), a piston (50), a right servo motor II (51), a right shaft II (52), a brush bundle II (53), a right bearing seat II (54), a right servo motor III (55), a right holder (56), a right lifting plate (57), a right rack I (58), a guide rail V (59), a right gear II (60), a right rack II (61), a right servo motor IV (62), a right gear I (63), a right carriage (64) and a right servo motor V (65), wherein
a left brush system comprises: the lower bottom plate (2) is fixed below the frame (1); the left carriage (5) is installed above the lower bottom plate (2) via the guide rail I (4); the left rack I (6) is fixed on the left side of the left carriage (5); the left servo motor I (3) is fixed below the lower bottom plate (2), and the left gear I (7) is installed at the output end thereof; the left gear I (7) is engaged with the left rack I (6); the left lifting plate (12) is installed on the right side of the left carriage (5) via the guide rail II (11); the left rack II (8) is fixed on the right side of the left carriage (5); the left servo motor II (9) is fixed on the right side of the left lifting plate (12), and the left gear II is fixed at the output end thereof; the left gear II (10) is engaged with the left rack II (8); the four guide sleeves I (14) are fixed on a top plate of the left lifting plate (12); the four guide posts I (13) matched with the guide sleeves I (14) are fixed below the floating rack (16); the springs I (15) are sleeved on the guide posts I (13) and arranged above the guide sleeves I (14); the left servo motor III (17) is fixed on the side of the floating rack (16), and the output end thereof is connected with the side of the turnover plate (19); the left servo motor IV (18) is fixed below the turnover plate (19); the left bearing seat I (21) is fixed above the turnover plate (19); the left shaft I (20) is installed inside the left bearing seat I (21) via a bearing; the output end of the left servo motor IV (18) is connected with the lower part of the left shaft I (20); and the tapered brush (22) is fixed above the left shaft I (20);
a synchronous clamping drive system comprises: the upper bottom plate (23) is fixed above the frame (1); the upper gear (24) is fixed in the middle above the upper bottom plate (23); the left sliding plate (27) is installed above the upper bottom plate (23) via the guide rail III (26); the two left bearing seats II (28) are fixed above the left sliding plate (27); the two left shafts II (29) are installed inside the left bearing seats II (28) via bearings; the V-shaped rollers (30) are fixed above the two left shafts II (29); the two right bearing seats I (32) are fixed above the right sliding plate (33); the two right shafts I (31) are installed inside the right bearing seats I (32) via bearings; the V-shaped rollers (30) are fixed above the two right shafts I (31); the right servo motor I (35) is fixed below the right sliding plate (33), and the output end thereof is connected with one of the right shafts I (31); the cylinder (34) is fixed on the side of the frame (1), and the output end thereof is connected with the right sliding plate (33); an upper rack is fixed below the left sliding plate (27) and the right sliding plate (33) respectively, and the two upper racks (25) are engaged with the upper gear (24) at the same time; and
a right brush system comprises: a plurality of brush bundles I (36) are installed on the side of the fixed blocks (38); the springs II (37) are installed inside the fixed blocks (38) and arranged at the bottom of each of the brush bundles I (36); a plurality of fixed blocks (38) are distributed uniformly in the circumferential direction; one end of each spring III is connected with the inner side of the fixed block (38), and the other end is connected with the fixed ring (40); a plurality of tapered blocks (41) are fixed inside the fixed blocks (38) and arranged below the springs III (39); the tapered head (42) is arranged below the tapered blocks (41), and the tapered surfaces thereof are matched with the lower tapered surfaces of the tapered blocks (41); a plurality of guide posts II (44) are fixed below the fixed blocks (38) and matched with holes in the sliding block (45); the springs IV (43) are sleeved outside the guide posts II (44) and arranged below the fixed blocks (38); the sliding block (45) is installed at the upper end of an upper flat plate of the right shaft II (52) via the guide rail IV (46); the brush bundle II (53) is installed on the side of the upper flat plate of the right shaft II (52); the spring V (49) is arranged at the bottom of the brush bundle II (53); the upper end of the cylinder rod (47) is connected with the tapered head (42), and the lower end is connected with the piston (50); the cylinder sleeve (48) is matched with the cylinder rod (47) and fixed at the upper center position of the right shaft II (52); the piston (50) is matched with a hole in the upper center of the right shaft II (52); the cylinder rod (47), the cylinder sleeve (48), the piston (50) and the hole in the upper center of the right shaft II (52) together form a self-made cylinder; the right shaft II (52) is installed inside the right bearing seat II (54) via a bearing; the right bearing seat II (54) is installed inside the right holder (56); the right servo motor II (51) is fixed on the side of the right holder (56), and the output end thereof is connected with the right bearing seat II (54); the right servo motor III (55) is fixed at the bottom of the right bearing seat II (54), and the output end thereof is connected with the lower part of the right shaft II (52); the right lifting plate (57) is fixed below the right holder (56); the right lifting plate (57) is installed on the left side of the right carriage (64) via the guide rail V (59); the right rack I (58) is fixed on the left side of the right carriage (64); the right servo motor V (65) is fixed on the left side of the right lifting plate (57), and the right gear I (63) is installed at the output end thereof; the right gear I (63) is engaged with the right rack I (58); the right servo motor IV (62) is fixed at the bottom of the lower bottom plate (2), and the right gear II (60) is fixed at the output end thereof; the right rack II (61) is fixed on the right side of the right carriage (64); and the right gear II (60) is engaged with the right carriage (64).

## Patentansprüche

1. Vorrichtung zum Entfernen von Radgraten, bestehend aus einem Rahmen (1), einer unteren Bodenplatte (2), einem linken Servomotor I (3), einer Führungsschiene I (4), einem linken Schlitten (5), einer linken Zahnstange I (6), einem linken Zahnrad I (7), einer linken Zahnstange II (8), einem linken Servomotor II (9), einem linken Zahnrad II (10), einer Führungsschiene II (11), einer linken Hubplatte (12), Führungssäulen I (13), Führungshülsen I (14), Federn I (15), einer schwimmenden Zahnstange (16), einem linken Servomotor III (17), einem linken Servomotor IV (18), einer Wendeplatte (19), einer linken Welle I (20), einem linken Lagersitz I (21), einer konischen Bürste (22), einer oberen Bodenplatte (23), einem oberen Zahnrad (24), oberen Zahnstangen (25), einer Führungsschiene III (26), einer linken Gleitplatte (27), linken Lagersitzen II (28), linken Wellen II (29), V-förmigen Rollen (30), rechten Wellen I (31), rechten Lagersitzen I (32), einer rechten Gleitplatte (33), einem Zylinder (34), einem rechten Servomotor I (35), Bürstenbündel I (36), Federn II (37), feststehenden Blöcke (38), Federn III (39), einem feststehenden Ring (40), konischen Blöcke (41), einem konischen Kopf (42), Federn IV (43), Führungssäulen II (44), einem Gleitblock (45), einer Führungsschiene IV (46), einer Zylinderstange (47), einer Zylinderhülse (48), einer Feder V (49), einem Kolben (50), einem rechten Servomotor II (51), einer rechten Welle II (52), einem Bürstenbündel II (53), einem rechten Lagersitz II (54), einem rechten Servomotor III (55), einem rechten Halter (56), einer rechten Hubplatte (57), einer rechten Zahnstange I (58), einer Führungsschiene V (59), einem rechten Zahnrad II (60), einer rechten Zahnstange II (61), einem rechten Servomotor IV (62), einem rechten Zahnrad I (63), einem rechten Schlitten (64) und einem rechten Servomotor V (65),
wobei ein linkes Bürstensystem umfasst: die untere Bodenplatte (2) ist unterhalb des Rahmens (1) befestigt; der linke Schlitten (5) ist oberhalb der unteren Bodenplatte (2) über die Führungsschiene I (4) installiert; die linke Zahnstange I (6) ist an der linken Seite des linken Schlittens (5) befestigt; der linke Servomotor I (3) ist unterhalb der unteren Bodenplatte (2) befestigt, und das linke Zahnrad I (7) ist an dessen Abtriebsende installiert; das linke Zahnrad I (7) ist mit der linken Zahnstange I (6) im Eingriff; die linke Hubplatte (12) ist über die Führungsschiene II (11) an der rechten Seite des linken Schlittens (5) angebracht; die linke Zahnstange II (8) ist an der rechten Seite des linken Schlittens (5) befestigt; der linke Servomotor II (9) ist an der rechten Seite der linken Hubplatte (12) befestigt, und das linke Zahnrad II ist an dessen Abtriebsende angebracht; das linke Zahnrad II (10) ist mit der linken Zahnstange II (8) in Eingriff; die vier Führungshülsen I (14) sind an einer oberen Platte der linken Hubplatte (12) befestigt; die vier mit den Führungshülsen I (14) zusammenpassenden Führungssäulen I (13) sind unterhalb der schwimmenden Zahnstange (16) befestigt; die Federn I (15) sind auf den Führungssäulen I (13) ummantelt und oberhalb der Führungshülsen I (14) angeordnet; der linke Servomotor III (17) ist an der Seite der schwimmenden Zahnstange (16) befestigt und sein Abtriebsende ist mit der Seite der Wendeplatte (19) verbunden; der linke Servomotor IV (18) unterhalb der Wendeplatte (19) befestigt ist; der linke Lagersitz I (21) oberhalb der Wendeplatte (19) befestigt ist; die linke Welle I (20) innerhalb des linken Lagersitzes I (21) über ein Lager installiert ist; das Abtriebsende des linken Servomotors IV (18) mit dem unteren Teil der linken Welle I (20) verbunden ist; und die konische Bürste (22) oberhalb der linken Welle I (20) befestigt ist;
wobei ein synchrones Spannantriebssystem umfasst: die obere Bodenplatte (23) ist oberhalb des Rahmens (1) befestigt; das obere Zahnrad (24) ist mittig oberhalb der oberen Bodenplatte (23) befestigt; die linke Gleitplatte (27) ist über die Führungsschiene III (26) oberhalb der oberen Bodenplatte (23) installiert; die beiden linken Lagersitze II (28) sind oberhalb der linken Gleitplatte (27) befestigt; die beiden linken Wellen II (29) sind über Lager innerhalb der linken Lagersitze II (28) installiert; die V-förmigen Rollen (30) sind oberhalb der beiden linken Wellen II (29) befestigt; die beiden rechten Lagersitze I (32) sind oberhalb der rechten Gleitplatte (33) befestigt; die beiden rechten Wellen I (31) sind über Lager innerhalb der rechten Lagersitze I (32) installiert; die V-förmigen Rollen (30) sind oberhalb der beiden rechten Wellen I (31) befestigt; der rechte Servomotor I (35) ist unterhalb der rechten Gleitplatte (33) befestigt, und sein Abtriebsende ist mit einer der rechten Wellen I (31) verbunden; der Zylinder (34) an der Seite des Rahmens (1) befestigt ist und sein Abtriebsende mit der rechten Gleitplatte (33) verbunden ist; eine obere Zahnstange ist unter der linken Gleitplatte (27) bzw. der rechten Gleitplatte (33) befestigt, und die beiden oberen Zahnstangen (25) gleichzeitig mit dem oberen Zahnrad (24) in Eingriff sind; und
wobei ein rechtes Bürstensystem umfasst: eine Vielzahl von Bürstenbündeln I (36) an der Seite der feststehenden Blöcke (38) installiert sind; die Federn II (37) sind innerhalb der feststehenden Blöcke (38) installiert und am Boden jedes der Bürstenbündeln I (36) angeordnet; eine Vielzahl von feststehenden Blöcken (38) sind gleichmäßig in der Umfangsrichtung verteilt; ein Ende jeder Feder III ist mit der Innenseite des feststehenden Blocks (38) verbunden, und das andere Ende ist mit dem feststehenden Ring (40) verbunden; eine Vielzahl von konischen Blöcken (41) sind innerhalb der feststehenden Blöcke (38) befestigt und unter den Federn III (39) angeordnet; der konische Kopf (42) ist unter den konischen Blöcken (41) angeordnet und seine konischen Oberflächen sind mit den unteren konischen Oberflächen der konischen Blöcke (41) abgestimmt; eine Vielzahl von Führungssäulen II (44) sind unter den feststehenden Blöcken (38) befestigt und mit Löchern in dem Gleitblock (45) abgestimmt; die Federn IV (43) sind außerhalb der Führungssäulen II (44) ummantelt und unterhalb der feststehenden Blöcke (38) angeordnet; der Gleitblock (45) ist über die Führungsschiene IV (46) am oberen Ende einer oberen flachen Platte der rechten Welle II (52) angebracht; das Bürstenbündel II (53) ist an einer Seite der oberen flachen Platte der rechten Welle II (52) angebracht; die Feder V (49) ist an dem Boden des Bürstenbündels II (53) angeordnet; das obere Ende der Zylinderstange (47) ist mit dem konischen Kopf (42) und das untere Ende mit dem Kolben (50) verbunden; die Zylinderhülse (48) ist auf die Zylinderstange (47) abgestimmt und an der oberen Mittelpostion der rechten Welle II (52) befestigt; der Kolben (50) passt in ein Loch in der oberen Mitte der rechten Welle II (52); die Zylinderstange (47), die Zylinderhülse (48), der Kolben (50) und das Loch in der oberen Mitte der rechten Welle II (52) bilden zusammen einen selbstgebauten Zylinder; die rechte Welle II (52) ist über ein Lager innerhalb des rechten Lagersitzs II (54) installiert; der rechte Lagersitz II (54) ist im rechten Halter (56) installiert; der rechte Servomotor II (51) ist an der Seite des rechten Halters (56) befestigt und sein Abtriebsende ist mit dem rechten Lagersitz II (54) verbunden; der rechte Servomotor III (55) ist an dem Boden des rechten Lagersitzes II (54) befestigt und sein Abtriebsende ist mit dem unteren Teil der rechten Welle II (52) verbunden; die rechte Hubplatte (57) ist unter dem rechten Halter (56) befestigt; die rechte Hubplatte (57) ist auf der linken Seite des rechten Schlittens (64) über die Führungsschiene V (59) installiert; die rechte Zahnstange I (58) ist auf der linken Seite des rechten Schlittens (64) befestigt; der rechte Servomotor V (65) ist an der linken Seite der rechten Hubplatte (57) befestigt, und das rechte Zahnrad I (63) ist an seinem Abtriebsende installiert; das rechte Zahnrad I (63) ist mit der rechten Zahnstange I (58) im Eingriff; der rechte Servomotor IV (62) ist an dem Boden der unteren Bodenplatte (2) befestigt, und das rechte Zahnrad II (60) ist an seinem Abtriebsende angebracht; die rechte Zahnstange II (61) ist an der rechten Seite des rechten Schlittens (64) befestigt; und das rechte Zahnrad II (60) ist mit dem rechten Schlitten (64) in Eingriff.

## Revendications

1. Dispositif d'ébavurage pour des roues, comprenant un châssis (1), une plaque de fond inférieure (2), un servomoteur gauche I (3), un rail de guidage I (4), un chariot gauche (5), une crémaillère gauche I (6), un engrenage gauche I (7), une crémaillère gauche II (8), un servomoteur gauche II (9), un engrenage gauche II (10), un rail de guidage II (11), une plaque de levage gauche (12), des poteaux de guidage I (13), des manchons de guidage I (14), des ressorts I (15), une crémaillère flottante (16), un servomoteur gauche III (17), un servomoteur gauche IV (18), une plaque de retournement (19), un arbre gauche I (20), un siège de roulement gauche I (21), un balai conique (22), une plaque de fond supérieure (23), un engrenage supérieur (24), des crémaillères supérieures (25), un rail de guidage III (26), une plaque glissante gauche (27), des sièges de roulement gauche II (28), des arbres gauches II (29), des rouleaux en V (30), des arbres droits I (31), des sièges de roulement droit I (32), une plaque glissante droite (33), un cylindre (34), un servomoteur droit I (35), des faisceaux de balai I (36), des ressorts II (37), des blocs fixes (38), des ressorts III (39), une bague fixe (40), des blocs coniques (41), une tête conique (42), des ressorts IV (43), des poteaux de guidage II (44), un bloc glissant (45), un rail de guidage IV (46), une tige de cylindre (47), un manchon de cylindre (48), un ressort V (49), un piston (50), un servomoteur droit II (51), un arbre droit II (52), un faisceau de balai II (53), un siège de roulement droit II (54), un servomoteur droit III (55), un support droit (56), une plaque de levage droite (57), une crémaillère droite I (58), un rail de guidage V (59), un engrenage droit II (60), une crémaillère droite II (61), un servomoteur droit IV (62), un engrenage droit I (63), un chariot droit (64) et un servomoteur droit V (65), dans lequel
un système de balai gauche comprend : la plaque de fond inférieure (2) est fixée au-dessous du châssis (1) ; le chariot gauche (5) est installé au-dessus de la plaque de fond inférieure (2) par l'intermédiaire du rail de guidage I (4) ; la crémaillère gauche I (6) est fixée sur le côté gauche du chariot gauche (5) ; le servomoteur gauche I (3) est fixé au-dessous de la plaque de fond inférieure (2) et l'engrenage gauche I (7) est installé à l'extrémité de sortie de celle-ci ; l'engrenage gauche I (7) est engagé avec la crémaillère gauche I (6) ; la plaque de levage gauche (12) est installée sur le côté droit du chariot gauche (5) par l'intermédiaire du rail de guidage II (11) ; la crémaillère gauche II (8) est fixée sur le côté droit du chariot gauche (5) ; le servomoteur gauche II (9) est fixé sur le côté droit de la plaque de levage gauche (12) et l'engrenage gauche II est fixé à l'extrémité de sortie de celle-ci ; l'engrenage gauche II (10) est engagé avec la crémaillère gauche II (8) ; les quatre manchons de guidage I (14) sont fixés sur une plaque supérieure de la plaque de levage gauche (12) ; les quatre poteaux de guidage I (13) correspondant aux manchons de guidage I (14) sont fixés au-dessous de la crémaillère flottante (16) ; les ressorts I (15) sont manchonnés sur les poteaux de guidage I (13) et disposés au-dessus des manchons de guidage I (14) ; le servomoteur gauche III (17) est fixé sur le côté de la crémaillère flottante (16), et l'extrémité de sortie de celui-ci est reliée au côté de la plaque de retournement (19) ; le servomoteur gauche IV (18) est fixé au-dessous de la plaque de retournement (19) ; le siège de roulement gauche I (21) est fixé au-dessus de la plaque de retournement (19) ; l'arbre gauche I (20) est installé à l'intérieur du siège de roulement gauche I (21) par l'intermédiaire d'un roulement ; l'extrémité de sortie du servomoteur gauche IV (18) est reliée à la partie inférieure de l'arbre gauche I (20) ; et le balai conique (22) est fixé au-dessus de l'arbre gauche I (20) ;
un système d'entraînement de serrage synchrone comprend : la plaque de fond supérieure (23) est fixée au-dessus du châssis (1) ; l'engrenage supérieur (24) est fixé au-dessus central de la plaque de fond supérieure (23) ; la plaque glissante gauche (27) est installée au-dessus de la plaque de fond supérieure (23) par l'intermédiaire du rail de guidage III (26) ; les deux sièges de roulement gauche II (28) sont fixés au-dessus de la plaque glissante gauche (27) ; les deux arbres gauches II (29) sont installés à l'intérieur des sièges de roulement gauche II (28) par l'intermédiaire des roulements ; les rouleaux en V (30) sont fixés au-dessus des deux arbres gauches II (29) ; les deux sièges de roulement droit I (32) sont fixés au-dessus de la plaque glissante droite (33) ; les deux arbres droits I (31) sont installés à l'intérieur des sièges de roulement droit I (32) par l'intermédiaire des roulements ; les rouleaux en V (30) sont fixés au-dessus des deux arbres droits I (31) ; le servomoteur droit I (35) est fixé au-dessous de la plaque glissante droite (33), et l'extrémité de sortie de celui-ci est reliée à l'un des arbres droits I (31) ; le cylindre (34) est fixé sur le côté du châssis (1), et l'extrémité de sortie de celui-ci est reliée à la plaque glissante droite (33) ; une crémaillère supérieure est fixée au-dessous de la plaque glissante gauche (27) et de la plaque glissante droite (33) respectivement, et les deux crémaillères supérieures (25) sont engagées avec l'engrenage supérieur (24) en même temps ; et
un système de balai droit comprend : une pluralité de faisceaux de balai I (36) sont installés sur le côté des blocs fixes (38) ; les ressorts II (37) sont installés à l'intérieur des blocs fixes (38) et disposés au fond de chacun des faisceaux de balai I (36) ; une pluralité de blocs fixes (38) sont répartis de manière uniforme dans le sens circonférentiel ; une extrémité de chaque ressort III est reliée au côté intérieur du bloc fixe (38) et l'autre extrémité est reliée à la bague fixe (40) ; une pluralité de blocs coniques (41) sont fixés à l'intérieur des blocs fixes (38) et disposés au-dessous des ressorts III (39) ; la tête conique (42) est disposée au-dessous des blocs coniques (41), et les surfaces coniques de ceux-ci correspondent aux surfaces coniques inférieures des blocs coniques (41) ; une pluralité de poteaux de guidage II (44) sont fixés au-dessous des blocs fixes (38) et correspondent à trous dans le bloc glissant (45) ; les ressorts IV (43) sont manchonnés à l'extérieur des poteaux de guidage II (44) et disposés au-dessous des blocs fixes (38) ; le bloc glissant (45) est installé à l'extrémité supérieure d'une plaque plate supérieure de l'arbre droit II (52) par l'intermédiaire du rail de guidage IV (46) ; le faisceau de balai II (53) est installé sur le côté de la plaque plate supérieure de l'arbre droit II (52) ; le ressort V (49) est disposé au fond du faisceau de balai II (53) ; l'extrémité supérieure de la tige de cylindre (47) est reliée à la tête conique (42) et l'extrémité inférieure est reliée au piston (50) ; le manchon de cylindre (48) correspond à la tige de cylindre (47) et fixé à la position centrale supérieure de l'arbre droit II (52) ; le piston (50) correspond à un trou au centre supérieur de l'arbre droit II (52) ; la tige de cylindre (47), le manchon de cylindre (48), le piston (50) et le trou au centre supérieur de l'arbre droit II (52) forment ensemble un cylindre fabriqué par l'utilisateur ; l'arbre droit II (52) est installé à l'intérieur du siège de roulement droit II (54) par l'intermédiaire d'un roulement ; le siège de roulement droit II (54) est installé à l'intérieur du support droit (56) ; le servomoteur droit II (51) est fixé sur le côté du support droit (56), et l'extrémité de sortie de celui-ci est reliée au siège de roulement droit II (54) ; le servomoteur droit III (55) est fixé au fond du siège de roulement droit II (54), et l'extrémité de sortie de celui-ci est reliée à la partie inférieure de l'arbre droit II (52) ; la plaque de levage droite (57) est fixée au-dessous du support droit (56) ; la plaque de levage droite (57) est installée sur le côté gauche du chariot droit (64) par l'intermédiaire du rail de guidage V (59) ; la crémaillère de droite I (58) est fixée sur le côté gauche du chariot de droit (64) ; le servomoteur droit V (65) est fixé sur le côté gauche de la plaque de levage droite (57) et l'engrenage droit I (63) est installé à l'extrémité de sortie de celle-ci ; l'engrenage droit I (63) est engagé avec la crémaillère droite I (58) ; le servomoteur droit IV (62) est fixé au fond de la plaque de fond inférieure (2) et l'engrenage droit II (60) est fixé à l'extrémité de sortie de celle-ci ; la crémaillère droite II (61) est fixée sur le côté droit du chariot droit (64) ; et l'engrenage droit II (60) est engagé avec le chariot droit (64).
